Europäisches Patentamt

European Patent Office

Office européen des brevets

(11) Veröffentlichungsnummer : **0 125 529**
**B1**

(12) **EUROPÄISCHE PATENTSCHRIFT**

(45) Veröffentlichungstag der Patentschrift :
30.09.87

(51) Int. Cl.⁴ : **B 23 Q    3/157**

(21) Anmeldenummer : **84104460.5**

(22) Anmeldetag : **19.04.84**

(54) Werkzeugwechselvorrichtung für eine Werkzeugmaschine.

(30) Priorität : 20.04.83 DE 3314208
06.07.83 DE 3324312

(43) Veröffentlichungstag der Anmeldung :
21.11.84 Patentblatt 84/47

(45) Bekanntmachung des Hinweises auf die Patenterteilung : 30.09.87 Patentblatt 87/40

(84) Benannte Vertragsstaaten :
CH DE FR GB IT LI SE

(56) Entgegenhaltungen :
EP-A- 0 123 220
DE-B- 1 652 699

(73) Patentinhaber : Komet Stahlhalter- und Werkzeugfabrik Robert Breuning GmbH
Auf dem Kies 3
D-7122 Besigheim (DE)

(72) Erfinder : Eckle, Otto
Friedenstrasse 9
D-7121 Löchgau (DE)

(74) Vertreter : Liebau, Gerhard, Dipl.-Ing.
Birkenstrasse 39
D-8900 Augsburg 22 (DE)

## Beschreibung

Die Erfindung betrifft eine Werkzeugwechselvorrichtung für eine Werkzeugmaschine mit einer Werkzeughalteraufnahme, die insbesondere an einer Spindel angebracht ist, umfassend einen in die Werkzeughalteraufnahme einsetzbaren, ein Werkzeug tragenden Werkzeughalter, einen diesen beim Werkzeugwechsel erfassenden Wechselarm und eine automatische Betätigungsvorrichtung, die eine Spanneinrichtung zur Verbindung des Werkzeughalters mit der Werkzeughalteraufnahme betätigt, wobei der Werkzeughalter einen zylindrischen Abschnitt zum Angriff des Wechselarmes aufweist und in Achsrichtung dieses zylindrischen Abschnittes in die Werkzeughalteraufnahme einsetzbar ist.

Bei einer derartigen bekannten Werkzeugwechselvorrichtung (DE-AS 1 652 699) sind an einer gemeinsamen Schwenkwelle diametral gegenüberliegend zwei Wechselarme vorgesehen. Jeder dieser Wechselarme weist an seinem Ende eine halbzylindrische Lagerschale auf, deren Innendurchmesser in etwa dem Außendurchmesser des zylindrischen Abschnittes entspricht. Gegenüber dieser Lagerschale ist an dem Wechselarm eine in etwa in Längsrichtung des Wechselarmes bewegliche Sperrschiene angeordnet. Zum Werkzeugwechsel wird der Wechselarm in den Bereich der Werkzeughalteraufnahme verschwenkt, wobei er mit seiner halbzylindrischen Schale den zylindrischen Abschnitt des auszuwechselnden Werkzeuges teilweise umfaßt. Hierbei weicht die Sperrschiene entgegen der Kraft einer Feder zurück und drückt dann, wenn die halbzylindrische Schale an dem zylindrischen Abschnitt anliegt, an einer der halbzylindrischen Schale gegenüberliegenden Stelle auf den zylindrischen Abschnitt. Diese Art der Halterung ist jedoch nicht genügend genau, wenn man Werkzeuge auswechseln will, deren Werkzeughalter mit sehr enger Passung in die Werkzeughalteraufnahme paßt.

Außerdem hat der Wechselarm im Bereich der halbzylindrischen Schale verhältnismäßig große Bauabmessungen, so daß die Werkzeuge in einem Werkzeugmagazin, in welches sie von dem Wechselarm übergeben werden, in einem größeren Abstand zueinander angeordnet werden müssen. Das Werkzeugmagazin hat infolgedessen verhältnismäßig große Abmessungen. Damit der auszuwechselnde Werkzeughalter in seiner Achsrichtung eine bestimmte Lage gegenüber dem Wechselarm einnimmt und sich beim Auswechseln nicht ungewollt gegenüber dem Wechselarm verschiebt, ist es außerdem erforderlich, daß in axialer Richtung vor und hinter dem zylindrischen Abschnitt Schultern vorhanden sind, die im Durchmesser kleiner sind als die des zylindrischen Abschnittes. Der Wechselarm weist dementsprechend beidseitig der halbzylindrischen Schale Teile auf, die ebenfalls im Durchmesser etwas kleiner sind als der Durchmesser der halbzylindrischen Schale. Durch die Schultern wird der Werkzeughalter in seinem Querschnitt geschwächt oder aber, falls man eine Querschnittsschwächung vermeiden will, muß man den halbzylindrischen Abschnitt im Durchmesser entsprechend größer gestalten, was es wiederum erforderlich macht, daß die Werkzeughalter im Magazin mit noch größeren gegenseitigen Abständen angeordnet werden.

Die gebräuchlichste Art von Werkzeugwechselvorrichtungen arbeitet mit zangenartigen Greifern, die jeweils am Ende des Wechselarmes vorgesehen sind. Der Werkzeughalter weist einen Flansch auf, in welchen eine Rille mit trapezförmigem Querschnitt eingedreht ist. In diese Rille greifen die Zangen des Greifers ein. Auch hier ist die Verbindung zwischen Greifzange und Werkzeughalter verhältnismäßig ungenau. Weiterhin haben die Greiferzangen und auch der erforderliche Flansch den bereits oben erwähnten Nachteil, daß die Werkzeughalter in einem verhältnismäßig großen gegenseitigen Abstand im Magazin angeordnet werden müssen.

Der Erfindung liegt deshalb die Aufgabe zugrunde, eine Werkzeugwechselvorrichtung für eine Werkzeugmaschine der eingangs erwähnten Art zu schaffen, die unter Vermeidung obiger Nachteile eine sehr positionsgenaue Verbindung zwischen Werkzeughalter und Wechselarm ermöglich, die einfach im Aufbau ist, die selbst im Bereich insbesondere des Wechselkopfes kleine Bauabmessungen aufweist, und bei der die Werkzeughalter zum Angriff des Wechselarmes keine Durchmesservergrößerungen aufweisen müssen, so daß die Werkzeughalter in einem Werkzeugmagazin mit geringstmöglichem gegenseitigen Abstand angeordnet werden können.

Eine erste Lösung dieser Aufgabe besteht erfindungsgemäß darin, daß im zylindrischen Abschnit eine radial verlaufende Gewindebohrung vorgesehen ist, daß am freien Ende des Wechselarmes ein radial zur Achse des zylindrischen Abschnittes beweglicher Wechselkopf vorgesehen ist, der an seinem dem Werkzeughalter zugekehrten äußeren Ende mit mindestens einer prismaförmigen Zentrierausnehmung versehen ist, daß in dem Wechselkopf ein im Zentrum der Zentrierausnehmung sich in der radialen Bewegungsrichtung des Wechselkopfes erstreckender, in zwei entgegengesetzten Drehrichtungen motorisch antreibbarer Verbindungsbolzen vorgesehen ist, der in seiner Achsrichtung im Wechselkopf begrenzt verschiebbar ist und an seinem freien Ende ein in die Gewindebohrung passendes Außengewinde aufweist.

Eine zweite Lösung der Aufgabe besteht erfindungsgemäß darin, daß im zylindrischen Abschnitt eine radial verlaufende Gewindebohrung vorgesehen ist, in welcher eine zu der Spanneinrichtung gehörende Spannschraube eingeschraubt ist, daß am freien Ende des Wechselarmes ein radial zur Achse des zylindrischen Abschnittes beweglicher Wechselkopf vorgesehen ist, der an seinem, dem Werkzeughalter zugekehrten, äußeren Ende mit mindestens einer prismaförmigen Zentrierausnehmung versehen ist, daß in dem Wechselkopf ein in zwei entgegengesetzten Drehrichtungen motorisch antreibbarer Schraubendreher in der radialen Bewegungsrichtung des Wechselkopfes verschiebbar ist, der an seinem freien Ende einen mit der Spannschraube zusammenwirkenden, im Zentrum der Zentrierausnehmung vorgesehenen Mitnehmer aufweist, daß in dem Wechselkopf eine den Schraubendreher konzentrisch umgebende Gewindebüchse vorgesehen ist, welche ein zu der Spannschraube passendes Innengewinde aufweist, und in der radialen Bewegungsrichtung des Wechselkopfes in diesem verschiebbar gelagert ist, und daß die Gewindebüchse in Richtung auf das äußere Ende des Wechselkopfes durch eine Feder belastet und in entgegengesetzter Richtung durch eine Vorschubvorrichtung bewegbar ist.

Beide Lösungen der gestellten Aufgabe ermöglichen eine sehr positionsgenaue Verbindung zwischen dem Werkzeughalter und dem Wechselkopf, denn beide Teile werden mittels des Verbindungsbolzens bzw. der zur Spanneinrichtung gehörenden Spannschraube beim Wechselvorgang fest miteinander verschraubt. Die Positionsgenauigkeit zwischen beiden Teilen wird dabei maßgebend auch durch die prismaförmige Ausnehmung des Wechselkopfes gewährleistet. Weiterhin ist beiden Ausführungen der Vorteil gemeinsam, daß der Werkzeughalter nur den zylindrischen Abschnitt aufweisen muß und zum Angriff des Wechselarmes keine weiteren, über den Durchmesser des zylindrischen Abschnittes vorstehende, oder auch im Durchmesser kleinere Teile aufweisen muß. Da ferner der Wechselkopf nur von einer Seite her an dem Werkzeughalter angreift, wird beim Einsatz des Werkzeughalters in ein Werkzeugmagazin bzw. auch in die Werkzeughalteraufnahme seitlich neben dem Werkzeughalter kein Platz für den Wechselarm oder Teile desselben benötigt. Infolgedessen können die Werkzeughalter in sehr kleinen gegenseitigen Abständen im Magazin angeordnet werden, wobei die Teilung des Magazins nur unwesentlich größer zu sein braucht als der Durchmesser des zylindrischen Abschnittes.

Weiterhin wird der Werkzeughalter nicht durch irgendwelche Rillen oder Schultern geschwächt, so daß der Werkzeughalter äußerst stabil ist. Durch die positionsgenaue Verbindung zwischen Wechselkopf und Werkzeughalter können auch Werkzeughalter, die mit sehr enger Passung in eine Werkzeughalteraufnahme einzusetzen sind, problemlos gewechselt werden. Im übrigen ist die neue Werkzeugwechselvorrichtung für alle Verbindungssysteme zwischen Werkzeughalter und Werkzeughalteraufnahme anwendbar.

Weitere vorteilhafte Ausgestaltungen der erfindungsgemäßen Lösungen sind in den Unteransprüchen gekennzeichnet.

Die Erfindung wird in folgendem, anhand von mehreren in der Zeichnung dargestellten Ausführungsbeispielen näher erläutert. Bei diesen Ausführungsbeispielen sind auch Sachverhalte dargestellt, die sich auf den Gegenstand der Parallelanmeldung EP-A-0 123 220 beziehen.

Es zeigen :

Figur 1 ein erstes Ausführungsbeispiel im Längsschnitt,

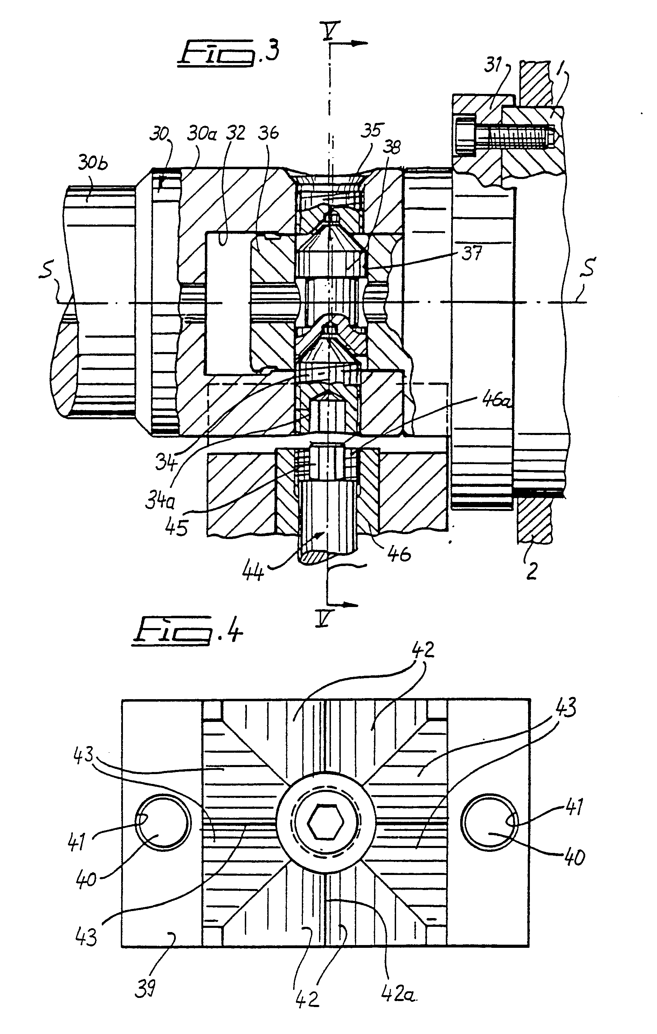

Figur 2 einen Querschnitt nach der Linie II-II der Figur 1,

Figur 3 ein zweites Ausführungsbeispiel im Längsschnitt,

Figur 4 eine Draufsicht auf den Wechselkopf in Richtung IV der Figur 5,

Figur 5 einen Querschnitt nach der Linie V-V der Figur 3,

Figur 6 ein weiteres Ausführungsbeispiel im Längsschnitt.

Die Verbindung zwischen Werkzeughalter und Werkzeughalteraufnahme wird in folgendem, anhand einer die Werkzeughalteraufnahme bildenden Werkzeugmaschinenspindel 1 erläutert.

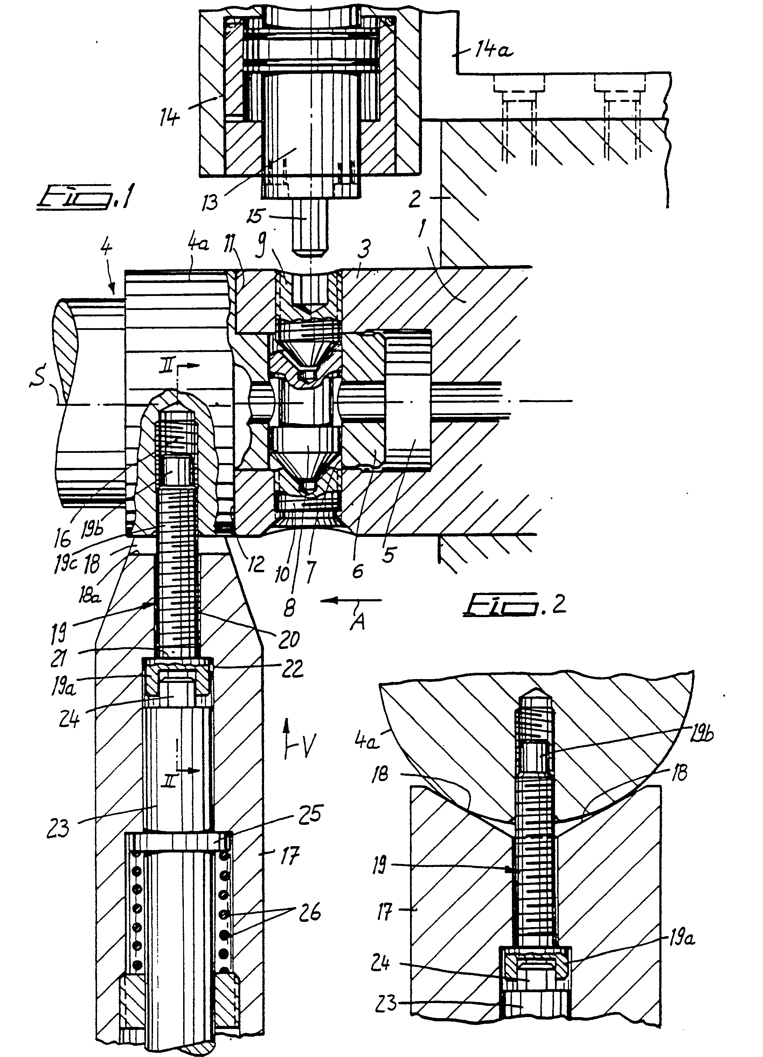

Die Werkzeugmaschinenspindel 1 ist drehbar in dem Spindelstock 2 gelagert. Sie weist an ihrem vorderen freien Ende eine Werkzeughalteraufnahme 3 für den Werkzeughalter 4 auf. Der Werkzeughalter 4 trägt an seinem freien, nicht dargestellten (in Figur 1 links) Ende einen Bohrkopf, ein Ausdrehwerkzeug, einen Fräser, eine Reibahle od. dgl., die fest oder auswechselbar, gegebenenfalls auch unter Zwischenschaltung von Zwischenstücken mit dem Werkzeughalter 4 verbunden sind. Der Werkzeughalter 4 weist einen mit sehr geringem Spiel (praktisch spielfrei) in die Aufnahmebohrung 5 der Werkzeughalteraufnahme 3 passenden, zylindrischen Schaft 6 auf. In dem zylindrischen Schaft 6 ist eine Querbohrung 7 angeordnet, in welcher ein zylindrischer Spannbolzen 8 verschiebbar gelagert ist. Dieser Spannbolzen 8 weist an seinem einen Ende eine kegelförmige Vertiefung und an seinem anderen Ende einen kegelförmigen Ansatz auf. In der Werkzeughalteraufnahme sind zwei diametral gegenüberliegende, radial verlaufende Innengewinde vorgesehen, in welchen je eine Spannschraube 9, 10 eingeschraubt ist. Die Spannschraube 9 greift mit einem kegelförmigen Ansatz in den Spannbolzen 8 ein, während die Spannschraube 10 mit einer kegelförmigen Vertiefung versehen ist, in welche der Spannbolzen eingreift. Die Achsen der Spannschrauben 9, 10 und die des Spannbolzens 8 sind so zueinander versetzt, daß beim Anziehen einer der Spannschrauben 9, 10 die Ringfläche 11 des Werkzeughalters 4 an die Stirnfläche 12 der Spindel 1 angepreßt wird.

Zum Werkzeugwechsel ist also ein Lösen und Anziehen der Spannschraube 9 erforderlich. Damit dies automatisch erfolgen kann, muß die Spindel 1 so stillgesetzt werden, daß sich die Spannschraube 9 immer an derselben Stelle befindet. Als Betätigungsvorrichtung für die Spannschraube 9 ist ein Schraubendreher 13 vorgesehen, der in dem Gehäuse 14 in Richtung der Spannschraubenachse verschiebbar ist. Das Gehäuse 14 ist über eine Halterung 14a fest mit dem Spindelstock 2 verbunden. Der Schraubendreher 13 weist an seinem freien Ende einen Mitnehmer 15 auf, der in die Spannschraube 9 paßt. Der Schraubendreher 13 ist ferner um seine Achse in zwei entgegengesetzten Drehrichtungen durch einen nicht dargestellten Elektromotor antreibbar.

An dem Werkzeughalter 4 ist ferner ein zylindrischer Abschnitt 4a vorgesehen, der eine radial zu der Achse S des zylindrischen Abschnittes verlaufende Gewindebohrung 16 aufweist.

Am freien Ende eines in der Zeichnung nicht dargestellten Wechselarmes, der in Richtung V radial zur Achse S des zylindrischen Abschnittes 4a beweglich ist, ist ein Wechselkopf 17 vorgesehen, der an seinem, dem Werkzeughalter 4 zugekehrten, Ende eine prismaförmige Zentrierausnehmung 18 aufweist. Die Scheitellinie 18a dieser prismaförmigen Ausnehmung verläuft parallel zu der Achse S.

In dem Zentrum der Zentrierausnehmung 18, also im Bereich der Scheitellinie 18a, ist ein Verbindungsbolzen 19 vorgesehen, der sich in Richtung der radialen Bewegungsrichtung V des Wechselkofes 17 erstreckt. Der Verbindungsbolzen 19 ist in einer Bohrung 20 des Wechselkopfes 17 radial zu dem zylindrischen Ansatz 4a begrenzt verschiebbar gelagert. Der Verbindungsbolzen 19, welcher bei dem gezeigten Ausführungsbeispiel als Zylinderkopfschraube ausgebildet ist, west einen durch seinen Kopf 19a gebildeten Bund 21 auf. Im Anschluß an die Bohrung 20 ist ein Ringabsatz 22 vorgesehen, surch welchen die Verschiebebewegung des Verbindungsbolzens 19 in Richtung zu der Zentrierausnehmung 18 hin begrenzt wird.

Der Verbindungsbolzen 19 weist an seinem freien Ende einen zylindrischen Führungsansatz 19b auf, dessen Durchmesser etwas kleiner ist als der Innendurchmesser der Gewindebohrung 16. Im übrigen paßt das Außengewinde 19c des Verbindungsbolzens 19 in die Gewindebohrung 16.

In dem Wechselkopf 17 ist ferner koaxial zu dem Verbindungsbolzen 19 der Schaft 23 eines in zwei entgegengesetzen Drehrichtungen motorisch antreibbaren Schraubendrehers angeordnet. Dieser Schaft 23 greift mit einem Mitnehmer 24 in den Schraubenkopf 19a ein. Der Schaft 23 weist ferner einen Bund 25 auf, an welchem sich eine Druckfeder 26 abstützt. Durch diese Druckfeder wird der Schaft 23 und damit auch der Verbindungsbolzen 19 in Richtung zum äußeren Ende des Wechselkopfes 17 hin belastet, so daß der Verbindungsbolzen 19 und damit auch der Schaft 23 in den Wechselkopf 17 hinein entgegen der Kraft der Feder 26 verschiebbar sind.

Gegebenenfalls könnten der Verbindungsbolzen 19 und der Schaft 23 auch aus einem Stück bestehen, wobei dann die Feder 26 an geeigneter Stelle anzuordnen wäre.

Zum Werkzeugwechsel wird die Spindel 1 so stillgesetzt, daß die Spannschraube 9 dem Mitnehmer 15 gegenübersteht. Der Wechselkopf 17 wird durch den Wechselarm radial zu der Achse S in Richtung V bewegt, wobei das freie Ende des Verbindungsbolzens 19 unter Wirkung der Feder 26 über die Zentrieraussparung 18 vorsteht. Die Zentrieraussparung 18 wird an dem zylindrischen Abschnitt 4a zur Anlage gebracht, wobei zunächst nur der zylindrische Abschnitt 19b ders Verbindungsbolzens 19 in die Gewindebohrung 16 eintritt. Im übrigen wird der Verbindungsbolzen 19 entgegen der Kraft der Feder 26 in den Wechselkopf 17 hineinverschoben. Wird nun der Schraubendreherschaft 23 in rechter Drehrichtung angetrieben, dann schraubt sich der Verbindungsbolzen mit seinem Außengewinde 19c in die Gewindebohrung 16 ein, solange bis sein Bund 21 an dem Ringabsatz 22 zur Anlage kommt. Werkzeughalter 4 und Wechselkopf 17 sind dann über den Verbindungsbolzen 19 positionsgenau miteinander verbunden.

Durch Preßluft wird der Schraubendreherschaft 13 mit seinem Mitnehmer 15 in die Spannschraube 9 hineinbewegt und anschließend im linken Drehsinn angetrieben. Hierdurch schraubt sich die Spannschraube 9 radial nach außen und die Spanneinrichtung zwischen Werkzeughalter 4 und Werkzeughalteraufnahme 3 wird damit gelöst.

Der Wechselkopf 17 mit dem daran verschraubten Werkzeughalter 4 wird nunmehr in Richtung A bewegt, bis der zylindrische Schaft 6 vollständig aus der Aufnahmebohrung 5 herausgetreten ist. Durch Bewegung des Wechselkopfes 17 entgegen des Pfeiles V und anschließender Schwenkbewegung kann nunmehr der auszuwechselnde Werkzeughalter 4 aus dem Bereich der Spindel herausbewegt werden. In der Zwischenzeit wurde ein identisch ausgestalteter Wechselkopf 17, welcher dem gezeigten Wechselkopf diametral gegenüber an dem Wechselarm angeordnet ist, im Bereich des Werkzeugmagazins mit einem anderen Werkzeughalter verbunden, der nunmehr in dem Bereich der Spindel 1 verschwenkt und radial in Richtung V bewegt wird. Sobald die Achse des Schaftes 6 mit der Achse der Aufnahmebohrung 5 fluchtet, erfolgt eine Verschiebung des Wechselkopfes 17 entgegen des Pfeiles A, wodurch der Schaft 6 in die Aufnahmebohrung 5 eingeschoben wird. Anschließend wird mittels des Schraubendrehers 13 die Spannschraube 9 wieder angezogen und der Verbindungsbolzen 19 aus der Gewindebohrung 16 herausgeschraubt. Nach Zurückbewegung des Wechselkopfes 17 entgegen der Pfeilrichtung V ist der Wechselvorgang beendet.

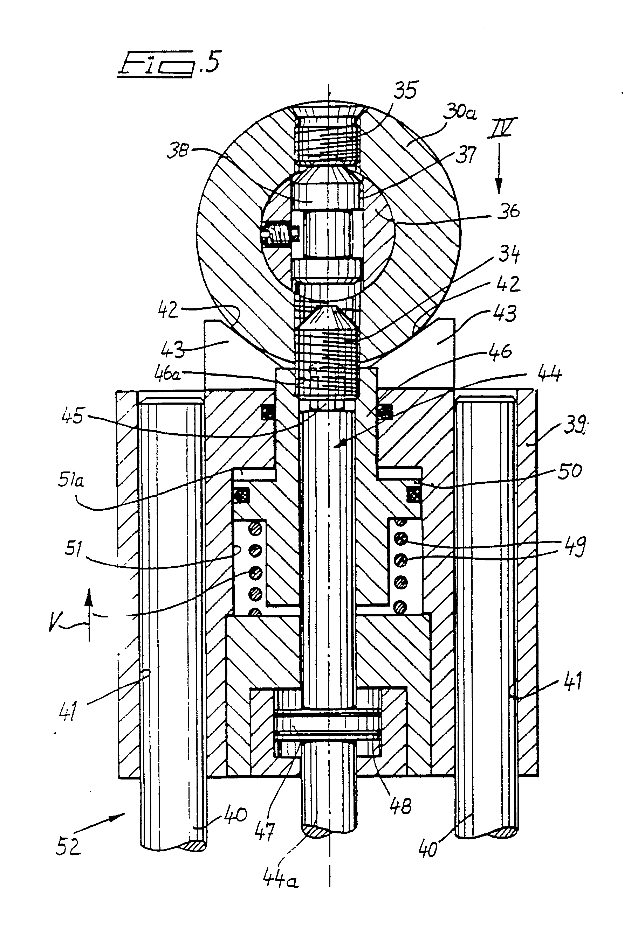

Bei dem in Figur 3 und 4 dargestellten Ausführungsbeispiel ist die Werkzeugmaschinenspindel 1 drehbar in dem Spindelstock 2 gelagert. Sie weist an ihrem vorderen freien Ende eine Werkzeughalteraufnahme 31 für den Werkzeughalter 30 auf. Der Werkzeughalter hat an seinem der Spindel zugekehrten Ende in einem zylindrischen Abschnitt 30a eine zylindrische Aufnahmebohrung 32 mit zwei diametral gegenüberliegenden, radial verlaufenden Innengewinden, in denen je eine Spannschraube 34, 35 radial verschraubbar ist. Der Werkzeughalter 30 trägt an seinem freien Ende 30b beispielsweise einen Bohrkopf, ein Ausdrehwerkzeug, einen Fräser, eine Reibahle oder dgl., die fest oder auswechselbar, gegebenenfalls auch unter Swischenschaltung von Zwischenstücken mit dem Werkzeughalter 30 verbunden sind.

Die Werkzeughalteraufnahme 31 weist einen in die Aufnahmebohrung 32 mit sehr geringem Spiel (praktisch spielfrei) passenden zylindrischen Schaft 36 auf.

In dem zylindrischen Schaft 36 ist eine Querbohrung 37 vorgesehen, in welcher ein zylindrischer Spannbolzen 38 radial verschiebbar gelagert ist. Dieser Spannbolzen 38 weist an seinem einen Ende einen kegelförmigen Ansatz auf und an seinem anderen Ende eine kegelförmige Vertiefung, in welche die Spannschrauben 34, 35 eingreifen.

Am freien Ende des Wechselarmes 52, der in seinem Zentrum um eine parallel zur Spindel verlaufende Achse schwenkbar gelagert sein kann, ist radial zur Achse des zylindrischen Abschnittes 30a ein Wechselkopf 39 in Richtung V verschiebbar gelagert. Zur verschiebbaren Lagerung dienen im vorliegenden Fall zwei Rundstangen 40, die in entsprechende Führungsbohrungen 41 des Wechselkopfes 39 eingreifen. Es kann aber auch jede andere Geradführung verwendet werden.

Der Wechselkopf 39 weist an seinem äußeren, dem Werkzeughalter 30 zugekehrten Ende, eine erste prismaförmige Zentrierausnehmung 42 auf, deren Scheitellinie 42a parallel zur Achse S des zylindrischen Abschnittes 30a bzw. zur Achse des Werkzeughalters 30 verläuft. Damit der Wechselkopf ohne Drehbewegung auch Werkzeughalter aufnehmen kann, deren Achse um 90° verdreht zu der Achse des Werkzeughalters 30 angeordnet ist, weist der ·Wechselkopf 39 auch noch eine zweite, senkrecht zu der ersten Zentrierausnehmung 42 verlaufende Zentrierausnehmung 43 auf, deren Scheitellinie 43a senkrecht zur Scheitellinie 42a verläuft.

In dem Wechselkopf 39 ist ferner ein Schraubendreher 44 angeordnet, der motorisch in zwei entgegengesetzten Drehrichtungen antreibbar ist. Der Schraubendreher 44 weist an seinem freien Ende einen in die Spannschraube 34 passenden Mitnehmer 45 auf. Der Mitnehmer 45 ist im Zentrum der Zentrierausnehmung 42 bzw. 43 angeordnet. Der Schraubendreher 44 weist einen zylindrischen Schaft 44a auf, der von einem Kohben 47 konzentrisch umgeben ist. Dieser Kolben 47 ist in einem im Wechselkopf 39 eingelassenen Zylinder 48 verschiebbar. Damit ist der gesamte Schraubendreher 44 in Richtung V, d. h. in Verschieberichtung des Wechselkopfes 39, in Richtung seiner Achse senkrecht zur Achse des zylindrischen Abschnittes 30a verschiebbar.

In dem Wechselkopf 39 ist eine Gewindebüchse 46 vorgesehen, die den Schraubendreher 44 konzentrisch umgibt. Die Gewindebüchse 46 weist ein zu der Spannschraube 34 passendes Innengewinde 46a auf. Auch die Gewindebüchse 46 ist in dem Wechselkopf 39 in Verschieberichtung V des Wechselkopfes 39 verschiebbar gelagert. Die Gewindebüchse 46 ist ferner durch eine Feder 49 in Richtung auf das äußere Ende des Wechselkopfes 39 belastet. Damit sie entgegen dem Druck der Feder 49 bewegt werden kann, ist eine Antriebsvorrichtung in Form eines die Gewindebüchse 46 konzentrisch umgebenden Kolbens 50 vorgesehen, welcher in einem entsprechenden Zylinderraum 51 des Wechselkopfes 39 verschiebbar gelagert ist.

In Figur 3 sind der Werkzeughalter 30 und die Werkzeughalteraufnahme 31 in verspannter Betriebsstellung dargestellt. Zum Werkzeugwechsel wird die Spindel 1 in vorbestimmter Stellung stillgesetzt und der Wechselarm 52 wird in eine Lage geschwenkt, in welcher die Achse des Schraubendrehers 44 in etwa mit der Achse in der Spannschraube 34 fluchtet. Der Wechselkopf 39 wird dann hydraulisch, pneumatisch oder mechanisch in Richtung V auf den Werkzeughalter 30 zu bewegt, bis seine prismaförmige Zentrierausnehmung 42 an dem zylindrischen Abschnitt 30a des Werkzeughalters 30 zur Anlage kommt und sich dabei gegenüber diesem zentriert. Mittels des Kolbens 47 wird der Schraubendreher 44 in Richtung auf die Spannschraube 34 verschoben und gleichzeitig im linken Drehsinn angetrieben. Sein Mitnehmer 45 dringt in die Mitnahmeöffnung der Spannschraube 34 ein. Anschließend dreht die Antriebswelle den Schraubendreher 44 im linken Drehsinn, wodurch sich die Spannschraube 34 gegenüber der Aufnahmebohrung 32 radial nach außen bewegt. Die Spannschraube 34 schraubt sich dabei gleichzeitig in das Innengewinde 46a der Gewindebüchse 46 ein. Damit das Schraubengewinde bei Beginn der Einschraubung keinen Zwang erfährt, steht die Gewindebüchse unter mäßigem Druck der Feder 49. Ist die Spannschraube 34 etwa mit ihrer halben Länge in die Gewindebüchse 46 eingeschraubt, so wird das in dem Zylinderraum 51a befindliche Hydrauliköl unter Druck gesetzt, wodurch die Gewindebüchse 46 entgegen der Pfeilrichtung V bewegt wird. Da der Werkzeughalter 30 über die Spannschraube 34 mit der Gewindebüchse 46 verbunden ist, wird hierdurch der Werkzeughalter 30 mit dem Wechselkopf 39 fest verspannt, wobei er durch die Zentrierausnehmung 42 auch genau ausgerichtet ist. Der Werkzeughalter und das von ihm getragene Werkzeug bleiben auch bei größerer Länge und größerem Gewicht absolut genau gegenüber dem Wechselkopf 39 ausgerichtet. Es ist besonders vorteilhaft, daß alle Kräfte zwischen dem Werkzeughalter 30 und dem Wechselkopf 39 in sich geschlossen sind und nach außen keine Auswirkung haben. Somit ist das System Werkzeughalter 30 und Wechselkopf 39 im Gleichgewicht.

Sobald Werkzeughalter 30 und Wechselkopf 39 fest miteinander verspannt sind, wird der Wechselarm 52 in Achsrichtung der Spindel 1 gemäß Figur 1 nach links bewegt, wodurch der Werkzeughalter 30 von dem Schaft 36 abgezogen wird. Anschlmießend kann der Wechselarm 52 verschwenken und den Werkzeughalter 30 einem nicht dargestellten Magazin übergeben. Gleichzeitig wird durch einen zweiten Wechselarm, der genauso ausgebildet ist wie der beschriebene Wechselarm, und zu diesem diametral gegenüberliegend angeordnet ist, ein anderer Werkzeughalter auf den Schaft 36 aufgeschoben. Dessen Schraubendreher dreht die Spannschraube 34 in entgegengesetzter rechter Drehrichtung, wodurch die Verbindung zwischen Wechselkopf und Werkzeughalter wieder gelöst wird und der Werkzeughalter wieder fest mit der Werkzeughalteraufnahme verspannt wird. Nachdem der Wechselkopf 39 entgegen der Pfeilrichtung V in seine Ausgangsstellung zurückbewegt wurde, ist der Werkzeugwechsel beendet.

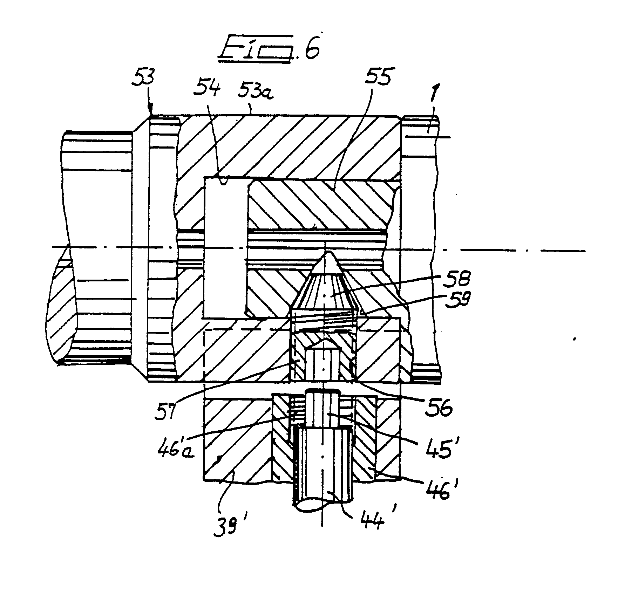

Figur 6 zeigt ein weiteres bereits behanntes Ausführungsbeispiel der Verbindung zwischen Werkzeughalter und Werkzeughalteraufnahme, bei dem der Werkzeughalter 53 ebenfalls eine zylindrische Aufnahmebohrung 54 aufweist, die auf den mit der Spindel 1 verbundenen zylindrischen Zapfen 55 genau passend aufschiebbar ist. Der Werkzeughalter 53 weist auch in diesem Fall einen zylindrischen Abschnitt 53a auf, der mit einer Gewindebohrung 56 versehen ist. In diese Gewindebohrung ist eine Spannschraube 57 eingeschraubt, die mit einem kegelförmigen Ansatz 58 in eine kegelförmige Bohrung 59 des Zapfens 55 eingreift. Der Wechselkopf 39', der Schraubendreher 44' mit seinem Mitnehmer 45' und die Gewindebüchse 46' sind in der gleichen Weise ausgebildet, wie die entsprechenden Teile bei dem vorhergehend beschriebenen Ausführungsbeispiel gemäß den Figuren 3-5. Zur Vermeidung von Wiederholungen wird deshalb bezüglich näherer Ausgestaltungen auf obige Beschreibung verwiesen. Auch in diesem fall wird bei der Drehbewegung des Schraubendrehers 44' die Spannschraube 57 gelöst und in das Innengewinde 46'a der Gewindebüchse 46' eingeschraubt.

**Patentansprüche**

1. Werkzeugwechselvorrichtung für eine Werkzeugmaschine, mit einer Werkzeughalteraufnahme (3), die insbesondere an einer Spindel (1) angebracht ist, umfassend einen in die Werkzeughalteraufnahme einsetzbaren, ein Werkzeug tragenden Werkzeughalter (4), einen diesen beim Werkzeugwechsel erfassenden Wechselarm und eine automatische Betätigungsvorrichtung, die eine Spanneinrichtung zur Verbindung des Werkzeughalters mit der Werkzeughalteraufnahme batätigt, wobei der Werkzeughalter einen zylindrischen Abschnitt (4a, 30a, 53a) zum Angriff des Wechselarmes aufweist und in Achsrichtung dieses zylindrischen Abschnittes in die Werkzeughalteraufnahme einsetzbar ist, dadurch gekennzeichnet, daß im zylindrischen Abschnitt (4a) eine radial verlaufende Gewindebohrung (16) vorgesehen ist, daß am freien Ende des Wechselarmes ein radial zur Achse (S) des zylindrischen Abschnittes (4a) beweglicher Wechselkopf (17) vorgesehen isty, der an seinem dem Werkzeughalter (4) zugekehrten äußeren Ende mit mindestens einer prismaförmigen Zentrierausnehmung (18) versehen ist, daß in dem Wechselkopf (17) ein im Zentrum der Zentrierausnehmung (18) sich in der radialen Bewegungsrichtung (V) des Wechselkopfes (17) erstreckender, in zwei entgegengesetzten Drehrichtungen motorisch antreibbarer Verbindungsbolzen (19) vorgesehen ist, der in seiner Achsrichtung im Wechselkopf (17) begrenzt verschiebbar ist und an seinem freien Ende ein in die Gewindebohrung (16) passendes Außengewinde (19c) aufweist.

2. Werkzeugwechselvorrichtung nach Anspruch 1, dadurch gekennzeichnet, daß der Verbindungsbolzen (19) einen Bund (21) aufweist und daß der Wechselkopf (17) mit einem Ringabsatz (22) versehen ist, durch welchen die Verschiebebewegung des Verbindungsbolzens (19) in Richtung zu der Zentrierausnehmung (18) hin begrenzt wird.

3. Werkzeugwechselvorrichtung nach Anspruch 1, dadurch gekennzeichnet, daß der Verbindungsbolzen (19) an seinem freien Ende mit einem zylindrischen Führungsansatz (19b) versehen ist, dessen Durchmesser etwas kleiner ist als der innendurchmesser der Gewindebohrung (16).

4. Werkzeugwechselvorrichtung nach Anspruch 1, dadurch gekennzeichnet, daß der Verbindungsbolzen (19) in den Wechselkopf (17) hinein entgegen Federkraft (26) verschiebbar ist.

5. Werkzeugwechselvorrichtung nach Anspruch 1, dadurch gekennzeichnet, daß in dem Wechselkopf (17) koaxial zu den Verbindungsbolzen (19) der Schaft (23) eines motorisch in zwei entgegengesetzten Drehrichtungen antreibbaren Schraubendrehers angeordnet ist, der an seinem dem Verbindungsbolzen (19) zugekehrten Ende einen Mitnehmer (24) aufweist, mit welchem er in den Kopf (19a) einer als Verbindungsbolzen (19) vorgesehenen Zylinderkopfschraube eingreift.

6. Werkzeugwechselvorrichtung nach Anspruch 5, dadurch gekennzeichnet, daß der Schaft (23) des Schraubendrehers in den Wechselkopf (17) hinein entgegen Federkraft (26) verschiebbar ist.

7. Werkzeugwechselvorrichtung nach Anspruch 1, dadurch gekennzeichnet, daß am äußeren Ende des Wechselkopfes eine sich senkrecht zu der ersten prismaförmigen Zentrierausnehmung erstreckende zweite prismaförmige Zentrierausnehmung vorgesehen ist.

8. Werkzeugwechselvorrichtung für eine Werkzeugmaschine mit einer Werkzeughalteraufnahme (3), die insbesondere an einer Spindel (1) angebracht ist, umfassend einen in die Werkzeughalteraufnahme einsetzbaren, ein Werkzeug tragenden Werkzeughalter (4), einen diesen beim Werkzeugwechsel erfassenden Wechselarm und eine automatischen Betätigungsvorrichtung, die eine Spanneinrichtung zur Verbindung des Werkzeughalters mit der Werkzeughalteraufnahme batätigt, wobei der Werkzeughalter einen zylindrischen Abschnitt (4a, 30a, 53a) zum Angriff des Wechselarmes aufweist und in Achsrichtung dieses zylindrischen Abschnittes in die Werkzeughalteraufnahme einsetzbar ist, dadurch gekennzeichnet, daß im zylindrischen Abschnitt (30a, 53a) eine radial verlaufende Gewindebohrung (34a, 56) vorgesehen ist, in welcher eine zu der Spanneinrichtung gehörende Spannschraube (34, 57) eingeschraubt ist, daß am freien Ende des Wechselarmes (52) ein radial zur Achse (S) des zylindrischen Abschnittes (30a, 53a) beweglicher Wechselkopf (39, 39') vorgesehen ist, der an seinem dem Werkzeughalter (30, 53) zugekehrten äußeren Ende mit mindestens einer prismaförmigen Zentrierausnehmung (42, 43) versehen ist, daß in dem Wechselkopf (39, 39') ein in zwei entgegengesetzen Drehrichtungen motorisch antreibbarer Schraubendreher (44, 44') in der radialen Bewegungsrichtung (V) des Wechselkopfes (39, 39') verschiebbar ist, der an seinem freien Ende einen mit der Spannschraube (34, 57) zusammenwirkenden, im Zentrum der Zentrierausnehmung (42, 43) vorgesehenen Mitnehmer (45, 45') aufweist, daß in dem Wechselkopf eine den Schraubendreher (44, 44') konzentrisch umgebende Gewindebüchse (46, 46') vorgesehen ist, welche ein zu der Spannschraube (34, 57) passendes Innengewinde (46a, 46'a) aufweist, und in der radialen Bewegungsrichtung (V) des Wechselkopfes (39, 39') in diesem verschiebbar gelagert ist, und daß die Gewindebüchse (46, 46') in Richtung auf das äußere Ende des Wechselkopfes (39, 39') durch eine Feder (49) belastet und in entgegengesetzter Richtung durch eine Vorschubvorrichtung (50, 51) bewegbar ist.

9. Werkzeugwechselvorrichtung nach Anspruch 8, dadurch gekennzeichnet, daß als Vorschubvorrichtung ein die Gewindebüchse (46) konzentrisch umgebender Kolben (50) vorgesehen ist, welcher in einem entsprechenden Zylinderraum (51) des Wechselkopfes (39) verschiebbar ist.

10. Werkzeugwechselvorrichtung nach Anspruch 8 oder 9, dadurch gekennzeichnet, daß am äußeren Ende des Wechselkopfes (39) eine sich senkrecht zu der ersten prismaförmigen Zentrierausnehmung (42) erstreckende zweite prismaförmige Zentrierausnehmung (43) vorgesehen ist.

11. Werkzeugwechselvorrichtung nach Anspruch 8, dadurch gekennzeichnet, daß der Schraubendreher (44) einen zylindrischen Schaft (44a) aufweist, der von einem Kolben (47) konzentrisch umgeben ist, und daß dieser Kolben (47) in einem im Wechselkopf (39) eingelassenen Zylinder (48) axial verschiebbar und drehbar ist.

## Claims

1. Tool changing device for a machine tool having a tool holder receiving means (3) which is more particularly provided on a spindle (1), comprising a tool holder (4) which can be fitted into the tool holder receiving means and which carries a tool, a change arm which engages the tool holder in the tool changing operation, and an automatic actuating means which actuates a clamping means for connecting the tool holder to the tool holder receiving means, wherein the tool holder has a cylindrical portion (4a, 30a, 53a) for engagement of the change arm and can be fitted into the tool holder receiving means in the axial direction of said cylindrical portion, characterized in that provided in the cylindrical portion (4a) is a radially extending screwthreaded bore (16), that provided at the end of the change arm is a changing head (17) which is movable radially with respect to the axis (S) of the cylindrical portion (4a) and which is provided with at least one prism-shaped centering recess (18), at its outer end which is towards the tool holder (4), and that provided in the changing head (17) is a connecting pin (19) which extends in the centre of the centering recess (18) in the radial direction of movement (V) of the changing head (17) and which can be driven by motor means in two opposite directions of rotation and which is limitedly displaceable in its axial direction in the changing head (17) and which is provided at its free end with a male screwthread (19c) which fits into the screwthreaded bore (16).

2. Tool changing device according to claim 1 characterized in that the connecting pin (19) has a shoulder (21) and that the changing head (17) is provided with an annular step (22) for limiting the displacement of the connecting pin (19) in a direction towards the centering recess (18).

3. Tool changing device according to claim 1 characterized in that at its free end the connecting pin (19) is provided with a cylindrical projecting guide portion (19b) whose diameter is somewhat smaller than the inside diameter of the screwthreaded bore (16).

4. Tool changing device according to claim 1 characterized in that the connecting pin (19) is displaceable into the changing head (17) against a spring force (26).

5. Tool changing device according to claim 1 characterized in that disposed in the changing head (17) coaxially with respect to the connecting pin (19) is the shank (23) of a screwdriver which can be driven by motor means in two opposite directions of rotary movement and which is provided at its end which is towards the connecting pin (19) with an entrainment member (24) with which it engages into the head (19a) of a socket-head screw provided as the connecting pin (19).

6. Tool changing device according to claim 5 characterized in that the shank (23) of the screwdriver is displaceable into the changing head (17) against a spring force (26).

7. Tool changing device according to claim 1 characterized in that the outer end of the changing head there is provided a second prism-shaped centering recess which extends perpendicular to the first prism-shaped centering recess.

8. Tool changing device for a machine tool, having a tool holder receiving means (3) which is more particularly provided on a spindle (1), comprising a tool holder (30, 53) which can be fitted into the tool holder receiving means and which carries a tool, a change arm which engages the tool holder in the tool changing operation, and an automatic actuating means which actuates a clamping means for connecting the tool holder to the tool holder receiving means, wherein the tool holder has a cylindrical portion (30a, 53a) for engagement of the change arm and can be fitted into the tool holder receiving means in the axial direction of said cylindrical portion, characterized in that provided in the cylindirical portion (30a, 53a) is a radially extending screwthreaded bore (34a, 56), into which is screwed a clamping screw (34, 57) being part of the clamping means, that provided at the end of the change arm (52) is a changing head (39, 39') which is movable radially with respect to the axis (S) of the cylindrical portion (30a, 53a) and which is provided with at least one prism-shaped centering recess (42, 43), at its outer end which is towards the tool holder (30, 53) that provided in the changing head (39, 39') is a screwdriver (44, 44') which can be driven by a motor in two opposite directions of rotation and can be moved in the radial direction of movement (V) of the changing head (39, 39'), the screwdriver having at its free end a dog (45, 45') which cooperates with one of the clamping screws (34, 57) and is provided in the center of the centering recess (42, 43) that a threaded sleeve (46, 46') is provided in the changing head, which threaded sleeve concentrically surrounds the screwdriver (44, 44'), has an internal thread (46a, 46'a) which fits with the clamping screw (34, 57), and is supported in the changing head for movement in the radial direction of movement (V) of the changing head (39, 39'), and that the threaded sleeve (46, 46') is biased in a direction toward the outer end of the changing head (39, 39') by a spring (49) and can be moved in the opposite direction by a feed mechanism (50, 51).

9. Tool changing device according to claim 8, characterized in that as said feed mechanism there is provided a piston (50) which concentrically surrounds the threaded, sleeve (46) and is movable in a cylindrical chamber (51) provided in the changing head (39).

10. Tool changing device according to claim 8 or 9, characterized in that at the outer end of the changing head (39) there is provided a second prism-shaped centering recess (43) which extends perpendicular to the first prism-shaped centering recess (42).

11. Tool changing device according to claim 8, characterized in that the screwdriver (44) has a cylindrical shank (44a) which is surrounded concentrically by a piston (47), and that said piston (47) is axially movable and rotatable in a cylinder (48) provided in the changing head (39).

## Revendications

1. Dispositif de changement d'outil pour machine-outil avec un support de porte-outil (3) qui est en particulier monté sur une broche (1) comportant un porte-outil (4), portant un outil et pouvant se monter sur un support de porte-outil, un bras de changement recevant ce porte-outil au moment du changement d'outil, et un dispositif de commande automatique qui actionne un dispositif de serrage pour fixer le porte-outil sur le support de porte-outil, le porte-outil présentant une section cylindrique (4a, 30a, 53a) permettant la prise du bras de changement, et pouvant être monté dans le support de porte-outil dans la direction de l'axe de cette section cylindrique, caractérisé en ce que, dans la section cylindrique (4a), est prévu un alésage fileté (16) disposé radialement, en ce qu'à l'extrémité libre du bras de changement, est prévue une tête de rechange (17) pouvant se déplacer radialement vers l'axe (S) de la section cylindrique (4a), cette tête comportant, à son extrémité extérieure tournée vers le porte-outil (4), au moins une cavité de centrage (18) de forme prismatique, en ce que la tête de rechange (17) comporte un goujon de jonction (19), pouvant être entraîné par moteur dans deux directions de rotation opposées, et s'étendant dans la direction de déplacement radiale (V) de la tête de rechange (17), ce goujon pouvant se déplacer de manière limitée dans sa direction axiale dans la tête de rechange (17) et présentant, à son extrémité libre, un filetage extérieur (19c) s'adaptant à l'alésage fileté (16).

2. Dispositif de changement d'outil selon la revendication 1, caractérisé en ce que le goujon de jonction (19) présente un collet (21), et en ce que la tête de rechange (17) est pourvue d'un talon annulaire (22) permettant de limiter le déplacement du goujon de jonction (19) en direction de la cavité de centrage (18).

3. Dispositif de changement d'outil selon la revendication 1, caractérisé en ce que le goujon de jonction (19) est pourvu, à son extrémité libre, d'une saillie de guidage cylindrique (19b) dont le diamètre est un peu plus petit que le diamètre intérieur de l'alésage fileté (16).

4. Dispositif de changement d'outil selon la revendication 1, caractérisé en ce que le goujon de jonction (19) peut se déplacer dans la tête de rechange (17), à l'encontre de la force du ressort (26).

5. Dispositif de changement d'outil selon la revendication 1, caractérisé en ce que l'arbre (23) d'un tournevis pouvant être entraîné par moteur dans deux directions de rotation opposées, est disposé dans la tête de rechange (17) coaxialement par rapport au goujon de jonction (19), ce tournevis présentant à son extrémité tournée vers le goujon de jonction (19) un tenon d'entraînement (24), par lequel il coopère avec la tête (19a) d'une vis à tête cylindrique prévue comme goujon de jonction (19).

6. Dispositif de changement d'outil selon la revendication 5, caractérisé en ce que l'arbre (23) du tournevis peut se déplacer dans la tête de rechange (17) à l'encontre de la force du ressort (26).

7. Dispositif de changement d'outil selon la revendication 1, caractérisé en ce qu'une seconde cavité de centrage de forme prismatique est disposée perpendiculairement à la première cavité de centrage de forme prismatique, à l'extrémité extérieure de la tête de rechange.

8. Dispositif de changement d'outil pour machine-outil avec un support porte-outil (3) qui est en particulier monté sur une broche (1), comprenant un porte-outil (4) portant un outil, et qui peut se monter dans le support de porte-outil, un bras de changement recevant ce porte-outil au moment du changement d'outil, et un dispositif de commande automatique qui commande un dispositif de serrage pour fixer le porte-outil au support de porte-outil, le porte-outil présentant une section cylindrique (4a, 30a, 53a) pour permettre la prise du bras de changement et pouvant être monté dans le support de porte-outil dans la direction de l'axe de cette section cylindrique, caractérisé en ce que, dans la section cylindrique (30a, 53a), est prévu un alésage fileté (34a, 56) disposé radialement, dans lequel est vissée une vis de serrage (34, 57) faisant partie du dispositif de serrage, en ce qu'à l'extrémité libre du bras de changement (52), est prévue une tête de rechange (39, 39') pouvant se déplacer radialement vers l'axe (S) de la section cylindrique (30a, 53a), cette tête étant pourvue à son extrémité extérieure, tournée vers le porte-outil (30, 53), d'au moins une cavité de centrage (42, 43) de forme prismatique, en ce qu'un tournevis (44, 44') est monté dans la tête de rechange (39, 39') avec possibilité d'entraînement par moteur dans deux directions de rotation opposées et pouvant se déplacer dans la direction de déplacement radial (V) de la tête de rechange (39, 39'), ce tournevis présentant à son extrémité libre un tenon d'entraînement (45, 45') prévu au centre de la cavité de centrage (42, 43) et coopérant avec la vis de serrage (34, 57), en ce qu'il est prévu dans la tête de rechange une douille filetée (46, 46') entourant concentriquement le tournevis (44, 44'), cette douille présentant un filetage intérieur (46a, 46'a) s'adaptant à la vis de serrage (34, 57) et étant montée dans la tête de rechange (39, 39') avec possibilité de déplacement radial dans la direction (V) de cette tête, et en ce que la douille filetée (46, 46') est poussée en direction de l'extrémité extérieure de la tête de rechange (39, 39') par un ressort (49), et peut se déplacer dans la direction opposée sous l'effet d'un dispositif d'avance (50, 51).

9. Dispositif de changement d'outil selon la revendication 8, caractérisé en ce que le dispositif d'avance utilisé est un piston (50) entourant concentriquement la douille filetée (46), ce piston pouvant se déplacer dans une enceinte cylindrique correspondante (51) de la tête de rechange (39).

10. Dispositif de changement d'outil selon la revendication 8 ou 9, caractérisé en ce qu'une seconde cavité de centrage (43) de forme prismatique est disposée perpendiculairement à la première cavité de centrage (42) de forme prismatique, à l'extrémité extérieure de la tête de rechange (39).

11. Dispositif de changement d'outil selon la revendication 8, caractérisé en ce que le tournevis (44) présente un arbre cylindrique (44a) qui est entouré concentriquement par un piston (47), et en ce que ce piston (47) est monté avec possibilité de déplacement axial et en rotation dans un cylindre (48) inséré dans la tête de rechange.

0 125 529

Fig.1

Fig.2

Fig.3

Fig.4

Fig.5

Fig.6